(19) **Europäisches Patentamt European Patent Office Office européen des brevets**

(11) **EP 4 217 913 B1**

(12) **FASCICULE DE BREVET EUROPEEN**

(45) Date de publication et mention de la délivrance du brevet:
**29.04.2026 Bulletin 2026/18**

(21) Numéro de dépôt: **21751809.1**

(22) Date de dépôt: **28.07.2021**

(51) Classification Internationale des Brevets (IPC):
**G06V 20/56** *(2022.01)*     **G06V 20/58** *(2022.01)*

(52) Classification Coopérative des Brevets (CPC):
**G06V 20/588**

(86) Numéro de dépôt international:
**PCT/EP2021/071228**

(87) Numéro de publication internationale:
**WO 2022/063465 (31.03.2022 Gazette 2022/13)**

(54) **PROCÉDÉ DE DIFFÉRENTIATION D'UN MARQUAGE AU SOL SECONDAIRE D'UNE ROUTE D'UN MARQUAGE AU SOL PRIMAIRE**

VERFAHREN ZUR UNTERSCHEIDUNG EINER SEKUNDÄREN FAHRBAHNMARKIERUNG VON EINER PRIMÄREN FAHRBAHNMARKIERUNG

METHOD FOR DIFFERENTIATING A SECONDARY ROAD MARKING FROM A PRIMARY ROAD MARKING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2020 FR 2009569**

(43) Date de publication de la demande:
**02.08.2023 Bulletin 2023/31**

(73) Titulaire: **VALEO VISION**
**93012 Bobigny Cedex (FR)**

(72) Inventeur: **GRARD, Christophe**
**93012 BOBIGNY (FR)**

(74) Mandataire: **Valeo Visibility**
**Service Propriété Industrielle**
**c/o Valeo Vision**
**34, rue Saint André**
**93012 Bobigny (FR)**

(56) Documents cités:
**JP-A- 2012 037 312     US-A1- 2017 021 863**

- **GUMPP T ET AL: "Recognition and tracking of temporary lanes in motorway construction sites", INTELLIGENT VEHICLES SYMPOSIUM, 2009 IEEE, IEEE, PISCATAWAY, NJ, USA, 3 June 2009 (2009-06-03), pages 305 - 310, XP031489858, ISBN: 978-1-4244-3503-6**

**Description**

La présente invention se rapporte à un procédé de différentiation d'un marquage au sol secondaire d'une route sur laquelle se situe un véhicule d'un marquage au sol primaire de ladite route. Elle trouve une application particulière mais non limitative dans les véhicules automobiles. Elle concerne également un dispositif de différentiation pour la mise en œuvre dudit procédé de différentiation.

Dans le domaine des véhicules automobiles, il existe des procédés de détection d'un marquage au sol d'une route qui comprennent :

- l'éclairage à l'avant du véhicule automobile de ladite route par une caméra primaire,
- l'acquisition par ladite caméra primaire d'images dudit marquage au sol à l'avant dudit véhicule automobile,
- la détection par la caméra primaire du marquage au sol de ladite route devant le véhicule automobile,
- la détection par une caméra secondaire du marquage au sol de ladite route latéralement au véhicule automobile,
- l'exécution d'une fonction déterminée en fonction dudit marquage au sol détecté.

Selon l'application pour laquelle on utilise le procédé de détection, la fonction déterminée qui est exécutée est par exemple :

- une fonction pour aider ledit véhicule automobile à se garer, ou
- une fonction pour aider ledit véhicule automobile à changer de file, ou pour l'aider à rester dans une file.

La caméra secondaire est une caméra infrarouge ou proche infrarouge, car la lumière infrarouge est invisible à l'œil nu. Ceci permet de se conformer à la régulation actuelle qui interdit d'utiliser des caméras utilisant la lumière visible pour éclairer sur un côté du véhicule. Ainsi, les piétons ou véhicules qui se trouvent sur un côté du véhicule ne sont pas éblouis par de la lumière visible et ne sont pas dérangés par ladite lumière visible.

Un inconvénient de cet état de la technique est que la caméra secondaire qui est infrarouge ou proche infrarouge ne différencie pas les couleurs. Par conséquent, s'il existe des portions de route en travaux pour lesquelles il existe donc un marquage au sol primaire classiquement de couleur blanche qui est le marquage au sol normalisé de la route et un marquage au sol secondaire classiquement de couleur jaune qui est le marquage temporaire de la route, la caméra secondaire ne peut faire la différence entre ces deux types de marquages au sol et le procédé de détection de marquage au sol ne peut fonctionner correctement. Par conséquent, on ne sait quel marquage au sol suivre pour exécuter la fonction déterminée. JP 2012 037312 A décrit un système embarqué utilisant une caméra unique pour détecter un premier marquage routier et un second marquage de même forme, puis les différencier via leur relation de position relative (distance avant/arrière et gauche/droite). Il compare la relation géométrique observée avec une base de données de relations prédéfinies pour identifier le marquage correct parmi plusieurs similaires. L'objectif est de permettre la détermination correcte de la voie ou du marquage pertinent même lorsque plusieurs marquages identiques sont présents.

Dans ce contexte, la présente invention vise à proposer un procédé de différentiation d'un marquage au sol secondaire d'une route sur laquelle se situe un véhicule d'un marquage au sol primaire de ladite route qui permet de résoudre l'inconvénient mentionné selon les revendications attachées.

L'invention et ses différentes applications seront mieux comprises à la lecture de la description qui suit et à l'examen des figures qui l'accompagnent :

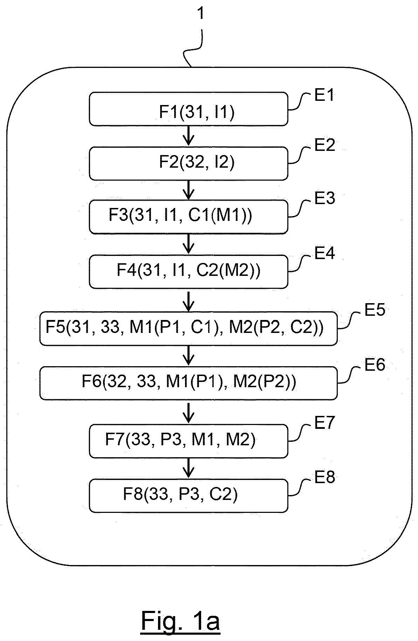

Fig. 1a est un organigramme d'un procédé de différentiation d'un marquage au sol secondaire d'une route sur laquelle se situe un véhicule d'un marquage au sol primaire de ladite route, selon un premier mode de réalisation non limitatif de l'invention,

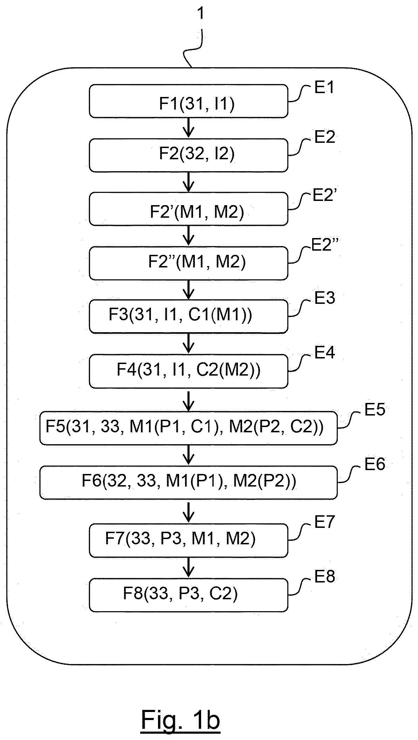

Fig. 1b est un organigramme d'un procédé de différentiation d'un marquage au sol secondaire d'une route sur laquelle se situe un véhicule d'un marquage au sol primaire de ladite route, selon un deuxième mode de réalisation non limitatif de l'invention,

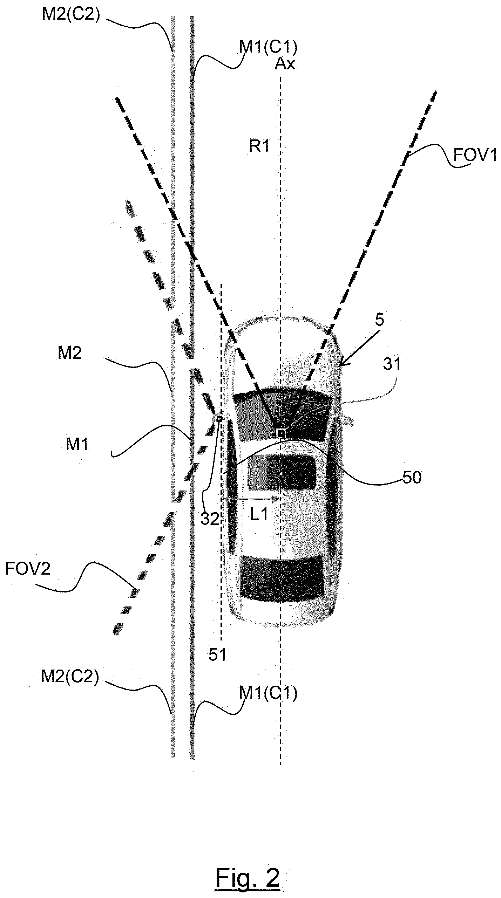

Fig. 2 est une vue schématique de dessus d'un véhicule qui se situe sur une route comprenant un marquage au sol primaire et un marquage au sol secondaire, selon un mode de réalisation non limitatif,

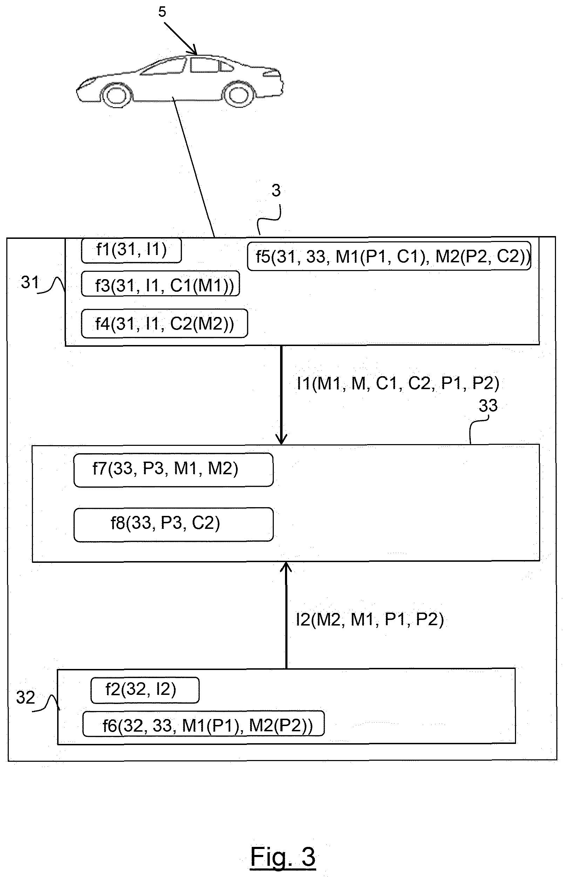

Fig. 3 est une vue schématique d'un dispositif différentiation d'un marquage au sol secondaire d'une route sur laquelle se situe un véhicule d'un marquage au sol primaire de ladite route, ledit dispositif de différentiation permettant de mettre en œuvre le procédé de différentiation des figures 1a et 1b, selon un mode de réalisation non limitatif,

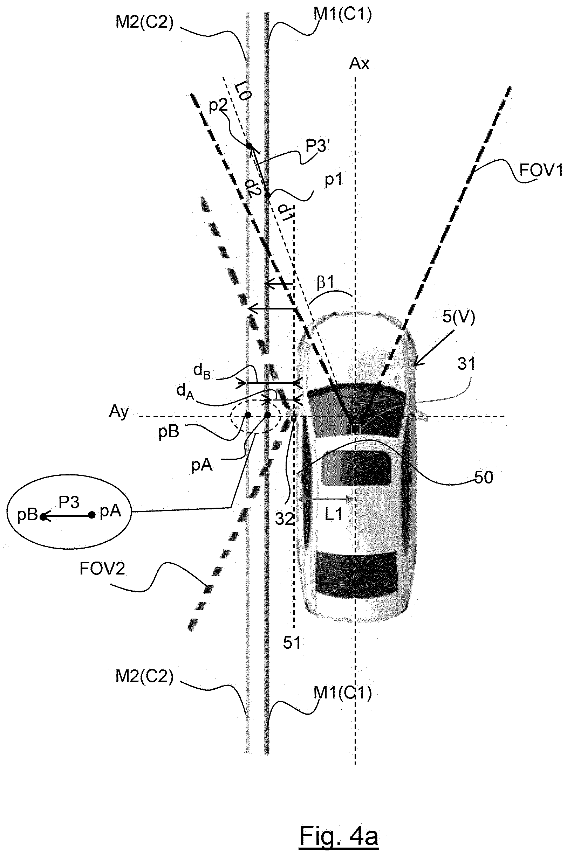

Fig. 4a est une vue schématique de dessus du véhicule de la figure 2, ladite vue comprenant des points sur le marquage au sol primaire et le marquage au sol secondaire utilisés pour déterminer la position d'un marquage au sol par rapport à l'autre, selon un premier mode de réalisation non limitatif,

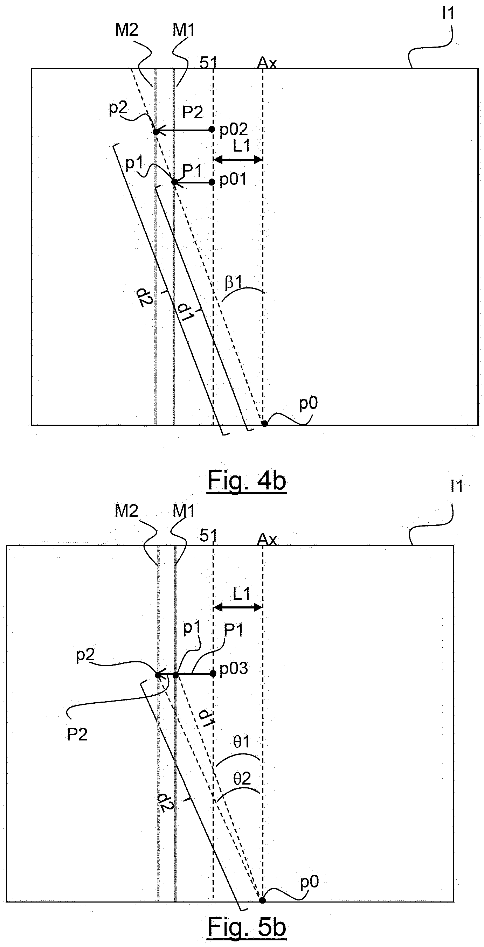

Fig. 4b est une vue de dessus schématique d'une image primaire acquise par une caméra primaire du dispositif de différentiation de la figure 3, ladite image primaire comprenant les points sur le marquage au sol primaire et sur le marquage au sol secondaire de la figure 4a, selon un premier mode de réalisation non limitatif,

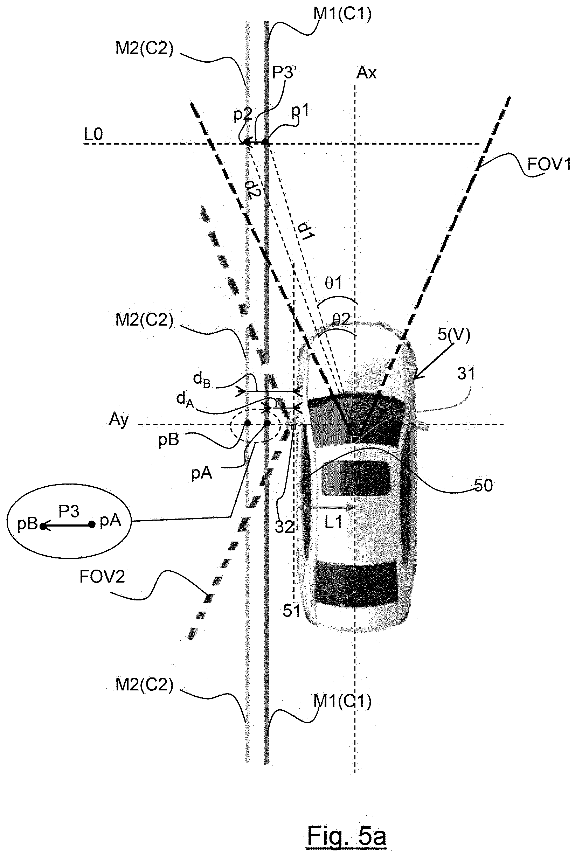

Fig. 5a est une vue schématique de dessus du véhicule de la figure 2, ladite vue comprenant des points sur le marquage au sol primaire et le marquage au sol secondaire utilisés pour déterminer la position d'un marquage au sol par rapport à l'autre, selon un deuxième mode de réalisation non limitatif,

Fig. 5b est une vue de dessus schématique d'une image primaire acquise par une caméra primaire du dispositif de différentiation de la figure 3, ladite image primaire comprenant les points sur le marquage au sol primaire et sur le marquage au sol secondaire de la figure 5a, selon un deuxième mode de réalisation non limitatif,

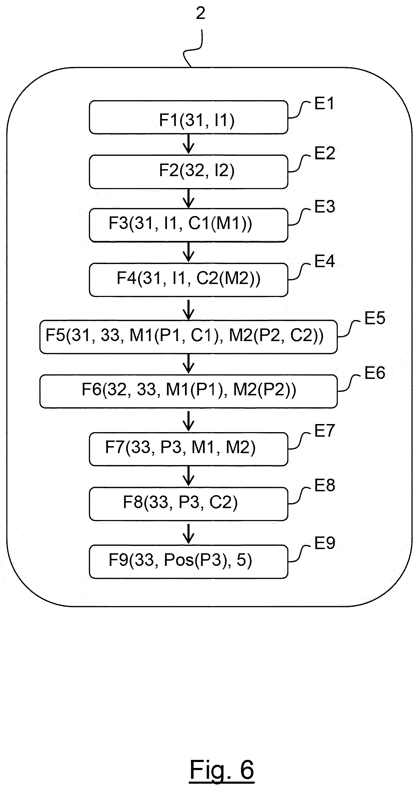

Fig. 6 est un organigramme d'un procédé de positionnement d'un véhicule par rapport à un marquage au sol secondaire d'une route sur laquelle se situe un véhicule d'un marquage au sol primaire de ladite route, selon un mode de réalisation non limitatif.

Les éléments identiques, par structure ou par fonction, apparaissant sur différentes figures conservent, sauf précision contraire, les mêmes références.

Le procédé de différentiation 1 d'un marquage au sol secondaire M2 d'une route R1 sur laquelle se situe un véhicule 5 d'un marquage au sol primaire M1 de ladite route R1, selon l'invention est décrit en référence aux figures 1 à 5b. Dans un mode de réalisation non limitatif, le véhicule 5 est un véhicule automobile. Par véhicule automobile, on entend tout type de véhicule motorisé. Ce mode de réalisation est pris comme exemple non limitatif dans la suite de la description. Dans la suite de la description, le véhicule 5 est ainsi autrement appelé véhicule automobile 5. Le véhicule automobile 5 présente une largeur L1*2 (tel qu'illustré sur les figures 2, 4a et 5a) et présente une longueur qui s'étend le long d'un axe longitudinal Ax perpendiculaire à un axe transversal Ay et passant par son milieu.

Le procédé de différentiation 1 est mis en œuvre par un dispositif de différentiation 3 illustré sur la figure 3 qui comprend :

-   une caméra primaire 31, et
-   au moins une caméra secondaire 32, et
-   une unité de contrôle électronique 33.

La caméra primaire 31 est disposée à l'avant ou à l'arrière du véhicule automobile 5 tandis que ladite au moins une caméra secondaire 32 est disposée sur un côté du véhicule automobile 5. Tel qu'illustré sur l'exemple non limitatif de la figure 2, la caméra primaire 31 est située à l'avant du véhicule automobile 5. Dans un mode de réalisation non limitatif, elle est disposée derrière le pare-brise au niveau du rétroviseur central. La caméra primaire 31 est une caméra qui fonctionne dans le domaine du visible. La caméra primaire 31 est configurée pour acquérir des images en couleurs RGB de l'extérieur du véhicule automobile 5.

Tel qu'illustré sur l'exemple non limitatif de la figure 2, la caméra secondaire 32 est située sur le côté gauche du véhicule automobile 5. Dans un mode de réalisation non limitatif elle est disposée dans un rétroviseur latéral. Dans des modes de réalisation non limitatifs, la caméra secondaire 32 est une caméra infrarouge (longueur d'onde comprise entre 700 nanomètres et 1 millimètre) ou proche infrarouge (longueur d'onde d'environ 850 nanomètres), ou infrarouge grandes ondes LWIR (longueur d'onde à environ 10micromètres), ou infrarouge ondes courtes SWIR (longueur d'onde à environ 1micromètre). La caméra secondaire 32 est configurée pour acquérir des images infrarouges de l'extérieur du véhicule automobile 5.

Dans un mode de réalisation non limitatif, l'unité de contrôle électronique 33 fait partie de la caméra primaire 31 ou est déportée par rapport à ladite caméra primaire 31. Dans un mode de réalisation non limitatif non illustré, le dispositif de différentiation 3 comprend une caméra secondaire 32 située sur chaque côté du véhicule automobile 5, une côté gauche et une côté droit.

Le procédé de différentiation 1 permet de différencier un marquage au sol secondaire M2 d'un marquage au sol primaire M1 d'une route R1 sur laquelle se situe le véhicule automobile 5. Tel qu'illustré sur la figure 2, le marquage au sol primaire M1 représente le marquage au sol normalisé d'une route R1, tandis que le marquage au sol secondaire M2 représente le marquage au sol relatif à des travaux sur la route R1. Ainsi, le marquage au sol primaire M1 est un marquage au sol permanent, tandis que le marquage au sol secondaire M2 est un marquage au sol temporaire. Le marquage au sol primaire M1 présente une couleur primaire C1 et le marquage au sol secondaire M2 présente une couleur secondaire C2. Les deux couleurs C1 et C2 sont différentes. Ainsi, dans un exemple non limitatif, la couleur primaire C1 est blanche (illustrée en couleur foncée sur la figure 2) tandis que la couleur secondaire C2 est jaune (illustrée en couleur plus claire sur la figure 2).

Pour différencier le marquage au sol secondaire M2 du marquage au sol primaire M1, le procédé de différentiation 1 comprend les étapes suivantes telles qu'illustrées sur la figure 1a selon un premier mode de réalisation non limitatif. On notera que certaines étapes sont réalisées en parallèle.

Dans une première étape E1, illustrée F1(31, I1) sur la figure 1a, la caméra primaire 31 acquiert des images primaires I1 de l'environnement extérieur à l'avant ou à l'arrière dudit véhicule automobile 5. Les images primaires I1 comprennent ainsi des images dudit marquage au sol primaire M1 et dudit marquage au sol secondaire M2 situés à l'avant ou à l'arrière dudit véhicule automobile 5. Tel qu'illustré sur l'exemple non limitatif de la figure 2, les images primaires I1 acquises sont celles de l'environnement extérieur situé à l'avant du véhicule automobile 5. La figure 2 illustre le champ de vision primaire FOV1, (en traits discontinus) de la caméra primaire 31 et le marquage au sol primaire M1 et le marquage au sol secondaire M2 vu dans le champ de vision primaire FOV1. On notera que dans un mode de réalisation non limitatif, cette étape se fait de façon continue. Etant donné que la caméra primaire 31 est une caméra qui fonctionne dans le domaine du visible, les images primaires I1 montrent les couleurs C1, C2 des deux marquages au sol primaire M1 et secondaire M2. Ainsi, tel qu'illustré sur la figure 2, le marquage au sol primaire M1 et le marquage au sol secondaire M2 sont représentés avec deux couleurs différentes respectivement une foncée et une claire dans le champ de vision primaire FOV1. Le champ de vision d'une caméra est autrement appelé dans le langage anglo-saxon « Field Of View ».

Dans une deuxième étape E2, illustrée F2(32, I2) sur la figure 1a, ladite au moins une caméra secondaire 32 acquiert des images secondaires I2 de l'environnement extérieur sur au moins un côté dudit véhicule automobile 5. Les images secondaires I2 comprennent ainsi des images dudit marquage au sol primaire M1 et dudit marquage au sol secondaire M2 situés sur un côté dudit véhicule automobile 5. Tel qu'illustré sur l'exemple non limitatif de la figure 2, le côté concerné est le côté gauche du véhicule automobile 5. La figure 2 illustre le champ de vision secondaire FOV2 (en traits discontinus) de la caméra secondaire 32 et le marquage au sol primaire M1 et le marquage au sol secondaire M2 vu dans le champ de vision secondaire FOV2. On notera que dans un mode de réalisation non limitatif, cette étape se fait de façon continue. Elle se fait ainsi en parallèle de la première étape E1. Etant donné que la caméra secondaire 32 est une caméra qui fonctionne dans le domaine de l'infrarouge ou du proche infrarouge, les images secondaires I2 ne montrent pas les couleurs C1, C2 des deux marquages au sol primaire M1 et secondaire M2.

Dans une troisième étape E3, illustrée F3(31, I1, C1(M1)) sur la figure 1a, à partir desdites images primaires I1, la caméra primaire 31 détermine la couleur primaire C1 (représentée en gris foncé sur la figure 2) du marquage au sol primaire M1. Comme la caméra primaire 31 fonctionne dans le domaine du visible, elle peut différentier les couleurs les unes des autres. Dans l'exemple non limitatif illustré, elle détermine que la couleur primaire C1 du marquage au sol primaire M1 est blanche.

Dans une quatrième étape E4, illustrée F4(31, I1, C2(M2)) sur la figure 1a, à partir desdites images primaires I1, la caméra primaire 31 détermine la couleur secondaire C2 (représentée en gris clair sur la figure 2) du marquage au sol secondaire M2. Dans l'exemple non limitatif illustré, elle détermine que la couleur secondaire C2 du marquage au sol secondaire M2 est jaune (illustrée gris claire sur la figure 2).

Dans une cinquième étape E5, illustrée F5(31, 33, M1(P1, C1), M2(P2, C2)) sur la figure 1a, la caméra primaire 31 transmet à l'unité de contrôle électronique 33 un vecteur de position primaire P1 du marquage au sol primaire M1 avec sa couleur primaire C1 associée, et un vecteur de position secondaire P2 du marquage secondaire M2 avec sa couleur secondaire C2 associée, le vecteur de position primaire P1 et le vecteur de position secondaire P2 étant obtenus à partir desdites images primaires I1. Par vecteur de position primaire P1 et vecteur de position secondaire P2, on entend la position par rapport au véhicule automobile 5, en particulier par rapport à une ligne 51 tangente au flanc 50 du véhicule automobile 5.

Dans un premier mode de réalisation non limitatif illustré sur les figures 4a et 4b, le vecteur de position primaire P1(p01->p1) est déduit à partir d'un angle $\beta 1$ entre l'axe longitudinal Ax et un point primaire p1 d'une image primaire I1 situé au niveau dudit marquage au sol primaire M1. On a ainsi :

Math 1

$$LP1_= d_1 \sin\beta 1 - L1$$

Avec LP1 sa longueur, p01 son point d'origine qui se trouve sur la ligne 51 tangente au flanc 50, et d1 la distance entre un point milieu p0 en bas de l'image primaire I1 et le point primaire p1.

De la même manière, dans un premier mode de réalisation non limitatif illustré sur les figures 4a et 4b, le vecteur de position secondaire P2(p02->p2) est déduit à partir du même angle $\beta 1$ entre l'axe longitudinal Ax et un point secondaire p2 d'une image primaire I1 situé au niveau dudit marquage au sol secondaire M2. On a ainsi :

Math 2

$$LP2_= d_2 \sin\beta 1 - L1$$

Avec LP2 sa longueur, et p02 son point d'origine qui se trouve sur une ligne 51 tangente au flanc 50, et d2 la distance entre le point milieu p0 en bas de l'image primaire I1 et le point secondaire p2.

Dans un deuxième mode de réalisation non limitatif illustré sur la figure 5a et 5b, le vecteur de position primaire P1(p03->p1) est déduit à partir d'un angle $\theta 1$ entre l'axe longitudinal Ax et un point primaire p1 d'une image primaire I1 situé au niveau dudit marquage au sol primaire M1. On a ainsi :

Math 3

$$LP1_= d_1 \sin\theta 1 - L1$$

Avec LP1 sa longueur, et p03 son point d'origine qui se trouve sur la ligne 51 tangente au flanc 50, et d1 la distance entre un point milieu p0 en bas de l'image primaire I1 et le point primaire p1. Le point milieu p0 représente l'emplacement de la caméra primaire 31.

De la même manière, dans un deuxième mode de réalisation non limitatif illustré sur les figures 5a et 5b, le vecteur de position secondaire P2(p03->p2) est déduite à partir d'un angle θ2 différent de θ1 entre l'axe longitudinal Ax et un point secondaire p2 d'une image primaire I1 situé au niveau dudit marquage au sol secondaire M2. On a ainsi :

Math 4

$$LP2_= d_2\sin\theta2 - L1$$

Avec LP2 sa longueur, et p03 son point d'origine qui se trouve sur la ligne 51 tangente au flanc 50, et d2 la distance entre le point milieu p0 en bas de l'image primaire I1 et le point secondaire p2.

Le point milieu p0 représente l'emplacement de la caméra primaire 31. Dans ce cas, le point primaire p1 et le point secondaire p2 sont alignés selon une ligne perpendiculaire à l'axe longitudinal Ax.

On notera que pour effectuer les calculs ci-dessus dans le premier mode de réalisation et dans le deuxième mode de réalisation, on est parti de l'hypothèse que le véhicule automobile 5 roule de façon parallèle avec les lignes des marquages au sol M1, M2, elles aussi parallèles.

Dans une sixième étape E6, illustrée F6(32, 33, M1(P1), M2(P2)) sur la figure 1a, la caméra secondaire 32 transmet à l'unité de contrôle électronique 33 le vecteur de position primaire P1 du marquage au sol primaire M1 et le vecteur de position secondaire P2 du marquage au sol secondaire M2, le vecteur de position primaire P1 et le vecteur de position secondaire P2 étant obtenus à partir desdites images secondaires I2. Par vecteur de position primaire P1 et vecteur de position secondaire P2, on entend la position par rapport au véhicule automobile 5, en particulier par rapport à une ligne 51 tangente au flanc 50 du véhicule automobile 5. Ainsi, la caméra secondaire 32 va transmettre également un vecteur de position primaire P1 et un vecteur de position secondaire P2, mais vu de son point de vue. Ainsi, l'unité de contrôle électronique 33 aura reçu deux vecteurs de position primaires P1 (l'un provenant de la caméra primaire 31 et l'autre provenant de la caméra secondaire 32), et deux vecteurs de position secondaires P2 (l'un provenant de la caméra primaire 31 et l'autre provenant de la caméra secondaire 32). Le vecteur de position primaire P1 provenant de la caméra primaire 31 est autrement appelé premier vecteur de position primaire P1, et le vecteur de position primaire P1 provenant de la caméra secondaire 32 est autrement appelé deuxième vecteur de position primaire P1. De la même manière, le vecteur de position secondaire P2 provenant de la caméra primaire 31 est autrement appelé premier vecteur de position secondaire P2, et le vecteur de position secondaire P2 provenant de la caméra secondaire 32 est autrement appelé deuxième vecteur de position secondaire P2.

De la même manière que pour la cinquième étape E5, les deux modes de réalisation non limitatifs illustrés sur les figures 5a et 5b sont utilisés pour déterminer le vecteur de position primaire P1 et le vecteur de position secondaire P2, en remplaçant l'image primaire I1 par une image secondaire I2, et le point milieu p0 de la caméra primaire 31 par le point milieu (non illustré) de la caméra secondaire 32.

On notera que la caméra primaire 31 a transféré les images primaire I1 à l'unité de contrôle électronique 33 et la caméra secondaire 32 a transféré les images secondaires I2 à l'unité de contrôle électronique 33 via un lien de communication adapté tel que dans des exemples non limitatifs un lien CAN ou Ethernet. On notera que les images primaires I1 et les images secondaires I2 sont rafraichies au fur et à mesure du mouvement du véhicule automobile 5 sur la route R1.

Dans une septième étape E7, illustrée F7(33, P3, M1, M2) sur la figure 1a, l'unité de contrôle électronique 33 détermine le vecteur de position relative P3(pA->pB) du marquage au sol secondaire M2 par rapport au marquage au sol primaire M1 dans le champ de vision secondaire FOV2 à partir desdits vecteurs de position primaires P1 et desdits vecteurs de position secondaire P2, à savoir à partir du premier vecteur de position primaire P1 et du deuxième vecteur de position primaire P1, et du premier vecteur de position secondaire P2 et du deuxième vecteur de position secondaire P2. Etant donné qu'elle a reçu les vecteurs de position primaires P1 et les vecteurs de position secondaires P2 de la caméra primaire 31 et de la caméra secondaire 32, l'unité de contrôle électronique 33 peut en déduire le vecteur de position relative P3' dans le champ de vision primaire FOV1 et par conséquent le sens du vecteur de position relative P3 dans le champ de vision secondaire FOV2, vers le véhicule 5 ou en partance.

Afin de déterminer le vecteur de position relative P3 dans le champ de vision secondaire FOV2, l'unité de contrôle électronique 33 peut effectuer le calcul suivant.

Tel qu'illustré sur la figure 4a, dans un premier mode de réalisation non limitatif, le vecteur de position relative P3' est déterminée avec angle β1 constant défini entre :

- un point primaire p1 d'une image primaire I1 situé au niveau dudit marquage au sol primaire M1 et un axe longitudinal Ax dudit véhicule automobile 5, et
- un point secondaire p2 d'une image primaire I1 situé au niveau dudit marquage au sol secondaire M2 et ledit axe longitudinal Ax1 dudit véhicule 5.

Le point primaire p1 est à une distance d1 de la caméra primaire 31 et le point secondaire p2 à une distance d2 de la caméra primaire 31. Le point primaire p1 et le point secondaire p2 sont alignés selon une ligne L0 qui passe par la caméra primaire 31, qui coupe le marquage au sol primaire M1 et le marquage au sol secondaire M2 et qui définit l'angle β1 avec l'axe longitudinal Ax.

En fonction de la vitesse V du véhicule automobile 5, on sait à quel instant le point primaire p1 et le point secondaire p2 qui sont dans le champ de vision primaire FOV1 de la caméra primaire 31 vont rentrer dans le champ de vision secondaire FOV2 de la caméra secondaire 32. On sait ainsi que le point primaire p1 et le point secondaire p2 qui sont vus par la caméra primaire 31 correspondent respectivement à un point tertiaire pA et un point quaternaire pB. Ces deux points pA et pB sont alignés selon un axe transversal Ay perpendiculaire à l'axe longitudinal Ax du véhicule automobile 5. Le point tertiaire pA est à une distance dA du véhicule automobile 5 et le point quaternaire pB est à une distance dB du véhicule automobile 5 selon l'axe transversal Ay. On a ainsi la relation suivante.

$$\text{Math 5}$$

$$d_{A=}d_1\sin\beta1 - \text{L1} = \text{LP1}$$

Avec LP1 la longueur du vecteur de position P1, et

$$\text{Math 6}$$

$$d_{B=}d_2\sin\beta1 - \text{L1} = \text{LP2}$$

Avec LP2 la longueur du vecteur de position P2.
Avec L1, la moitié de la largeur du véhicule automobile 5. Avec cette relation, on peut vérifier que le point tertiaire pA, et le point quaternaire pB qui sont vus par la caméra secondaire 32 se trouvent bien environ à la distance dA, et dB donnés par le calcul. La distance dA et la distance dB permettent d'en déduire le vecteur de position relatif P3(pA->pB), avec sa longueur dB-dA et sont point d'origine pA. Le sens du vecteur de position P3 est le même que celui du vecteur de position P3', vers le véhicule 5 ou en partance. Grâce à la distance dA, on sait que le point pA appartient au marquage M1. Grâce à la distance dB, on sait que le point pB appartient au marquage M2.
Tel qu'illustré sur la figure 5a, dans un deuxième mode de réalisation non limitatif, le vecteur de position relative P3' est déterminé avec un angle variable θ défini entre :

- un point primaire p1 d'une image primaire I1 au niveau dudit marquage au sol primaire M1 et l'axe longitudinal Ax dudit véhicule automobile 5, et
- un point secondaire p2 d'une image primaire I1 au niveau dudit marquage au sol secondaire M2 et ledit axe longitudinal Ax dudit véhicule automobile 5.

Le point primaire p1 est à une distance d1 de la caméra primaire 31 et le point secondaire p2 à une distance d2 de la caméra primaire 31. Le point primaire p1 et le point secondaire p2 sont alignés selon une ligne L0 perpendiculaire à l'axe longitudinal Ax et qui coupe le marquage au sol primaire M1 et le marquage au sol secondaire M2.

En fonction de la vitesse V du véhicule automobile 5, on sait à quel instant le point primaire p1 et le point secondaire p2 qui sont dans le champ de vision primaire FOV1 de la caméra primaire 31 vont rentrer dans le champ de vision secondaire FOV2 de la caméra secondaire 32. On sait ainsi que le point primaire p1 et le point secondaire p2 qui sont vus par la caméra primaire 31 correspondent respectivement à un point tertiaire pA et un point quaternaire pB. Ces deux points pA et pB sont alignés selon un axe transversal Ay perpendiculaire à l'axe longitudinal Ax du véhicule automobile 5. Le point tertiaire pA est à une distance dA du véhicule automobile 5 et le point quaternaire pB est à une distance dB du véhicule automobile 5 selon l'axe transversal Ay. On a ainsi la relation suivante.

$$\text{Math 7}$$

$$d_{A=}d_1\sin\theta1 - \text{L1} = \text{LP1}$$

Avec LP1 la longueur du vecteur de position P1, et

$$\text{Math 8}$$

$$d_{B=}d_2\sin\theta2 - \text{L1} = \text{LP2}$$

Avec LP2 la longueur du vecteur de position P2.
Avec L1, la moitié de la largeur du véhicule automobile 5. Avec cette relation suivante, on peut vérifier que le point tertiaire pA, et le point quaternaire pB qui sont vus par la caméra secondaire 32 se trouvent bien environ à la distance dA, et dB donnés par le calcul. La distance dA et la distance dB permettent d'en déduire le vecteur de position relatif P3, avec sa longueur dB-dA et sont point d'origine pA. Grâce à la distance dA, on sait que le point pA appartient au marquage M1. Grâce à la distance dB, on sait que le point pB appartient au marquage M2.

Dans une huitième étape E8, illustrée F8(33, P3, C2) sur la figure 1a, l'unité de contrôle électronique 33 effectue une corrélation entre la couleur secondaire C2 et le vecteur de position relative P3 dudit marquage au sol secondaire M2 (par rapport au marquage au sol primaire M1) dans le champ de vision secondaire FOV2 (grâce aux distances dA, dB calculées). Grâce aux données transmises par la caméra primaire 31, à savoir le vecteur de position primaire P1 avec sa couleur primaire associée C1, le vecteur de position secondaire P2 avec sa couleur secondaire associée C2 vus par la caméra primaire 31, et les données transmises par la caméra secondaire 32, à savoir le vecteur de position primaire P1 et le vecteur de position secondaire P2 vus par ladite caméra secondaire 32, l'unité de contrôle électronique 33 peut associer la couleur secondaire C2 au vecteur de position relatif P3.

Ainsi, en déterminant la couleur secondaire C2 du marquage au sol secondaire M2 et son vecteur de position relative P3 par rapport au marquage au sol primaire M1, on arrive à différentier ledit marquage au sol secondaire M2 dudit marquage au sol primaire M1.

Dans un deuxième mode de réalisation non limitatif illustré sur la figure 1b, outre les étapes E1 à E8, le procédé de différentiation 1 peut en outre comprendre les étapes supplémentaires suivantes :

- l'éclairage du marquage au sol primaire M1 et du marquage au sol secondaire M2 à l'avant ou à l'arrière du véhicule 5 (étape E2' illustrée F2'(M1, M2) sur la figure 1b), et/ou
- l'éclairage du marquage au sol primaire M1 et du marquage au sol secondaire M2 sur au moins un côté du véhicule 5 (étape E2" illustrée F2"(M1, M2) sur la figure 1b).

L'éclairage s'effectue par un module lumineux (non illustré). L'éclairage est notamment intéressant de nuit. On notera que ces étapes sont réalisées en même temps que toutes les étapes E1 à E8.

Le procédé de différentiation 1 est ainsi mis en œuvre par le dispositif de différentiation 3 illustré sur la figure 3.

Tel qu'illustré sur la figure 3, le dispositif de différentiation 3 comprend les éléments la caméra primaire 31, ladite au moins une caméra secondaire 32 et l'unité de contrôle électronique 33.

La caméra primaire 31 est ainsi configurée pour :

- acquérir des images primaires I1 de l'environnement extérieur dudit véhicule 5 à l'avant ou à l'arrière dudit véhicule 5, lesdites images primaires I1 comprenant des images dudit marquage au sol primaire M1 et dudit marquage au sol secondaire M2 situés à l'avant ou à l'arrière dudit véhicule 5 (fonction illustrée f1(31, I1)),
- déterminer à partir desdites images primaires I1 la couleur primaire C1 dudit marquage au sol primaire M1 (fonction illustrée f3(31, I1, C1(M1))),
- déterminer la couleur secondaire C2 dudit marquage au sol secondaire M2 (fonction illustrée f4(31, I1, C2(M2))),
- transmettre à l'unité de contrôle électronique 33 le vecteur de position primaire P1 du marquage primaire M1 avec sa couleur primaire C1 associée, et le vecteur de position secondaire P2 du marquage secondaire M2 avec sa couleur secondaire C2 associée, ledit vecteur de position primaire P1 et ledit vecteur de position secondaire P2 étant déduits desdites images primaires I1 (fonction illustrée f5(31, 33, M1(P1, C1), M2(P2, C2))).

Ladite au moins une caméra secondaire 32 est configurée pour :

- acquérir des images secondaires I2 dudit environnement extérieur sur au moins un côté dudit véhicule 5, lesdites images secondaires I2 comprenant des images dudit marquage au sol primaire M1 et dudit marquage au sol secondaire M2 situés sur ledit au moins un côté dudit véhicule 5 (fonction illustrée f2(32, 12)),
- transmettre à ladite unité de contrôle électronique 33 le vecteur de position primaire P1 du marquage au sol primaire M1 et le vecteur de position secondaire P2 du marquage au sol secondaire M2, ledit vecteur de position primaire P1 et ledit vecteur de position secondaire P2 étant déduits desdites images secondaires I2 (fonction illustrée f6(32, 33, M1(P1), M2(P2)).

Ladite unité de contrôle électronique 33 est configurée pour :

- déterminer le vecteur de position relative P3 dudit marquage au sol secondaire M2 par rapport au marquage au sol primaire M1 dans le champ de vision secondaire FOV2 de la caméra secondaire 32 à partir desdits vecteurs de position primaires P1 et desdits vecteurs de position secondaires P2 (fonction illustrée f7(33, P3, M1, M2)),
- réaliser une corrélation entre la couleur secondaire C2 et le vecteur de position relative P3 dudit marquage au sol secondaire M2 dans le champ de vision secondaire FOV2 (fonction illustrée f8(33, P3, C2)).

Le procédé de différentiation 1 peut ainsi être utilisé par tout autre procédé nécessitant la différentiation entre le marquage au sol primaire M1 et le marquage au sol secondaire M2, notamment lors d'utilisation d'une caméra secondaire 32 qui ne peut différentier les deux marquages au sol. Ainsi, il peut être utilisé pour un procédé de positionnement 2 d'un véhicule 5 par rapport à un marquage secondaire M2 d'une route R1 sur laquelle roule le véhicule 5. Ledit procédé de positionnement 2 est illustré sur la figure 6. Il comprend les étapes E1 à E8 du procédé de différentiation 1 et les étapes supplémentaires suivantes.

Dans une neuvième étape E9, illustrée F9(33, Pos(P3), 5), l'unité de contrôle électronique 33 calcule la position Pos du véhicule automobile 5 par rapport audit marquage au sol secondaire M2 en fonction dudit vecteur de position relative P3 dudit marquage au sol secondaire M2. Cette position Pos est ainsi déduite de la distance dB calculée précédemment. On détermine ainsi la position du véhicule automobile 5 par rapport au marquage au sol M2.

Suite au calcul de la position Pos, en fonction de l'application voulue, une fonction déterminée est exécutée.

Dans des modes de réalisation non limitatif, la fonction déterminée qui est exécutée est :

- une fonction pour garer automatiquement ledit véhicule automobile 5 dans le cas d'un véhicule autonome,
- une fonction pour aider ledit véhicule automobile 5 à se garer dans le cas d'un véhicule non autonome en zone en travaux,
- une fonction pour changer automatiquement de file dans le cas d'un véhicule autonome,
- une fonction pour afficher sur une interface homme-machine la couleur du marquage au sol sur le côté du véhicule au lieu d'un affichage en noir et blanc,
- une fonction pour aider à changer de file, aider à rester dans une file en zone de travaux etc.

Bien entendu la description de l'invention n'est pas limitée aux modes de réalisation décrits ci-dessus et au domaine décrit ci-dessus. Ainsi, dans un mode de réalisation non limitatif, le procédé de positionnement 2 peut en outre comporter l'éclairage du marquage au sol primaire M1 et du marquage au sol secondaire M2 à l'avant ou à l'arrière du véhicule 5, et l'éclairage du marquage au sol primaire M1 et du marquage au sol secondaire M2 sur au moins un côté du véhicule 5. On notera que sur les figures, le marquage normalisé de la route se trouve à droite du marquage temporaire de la route. Bien entendu, cela peut être l'inverse. Dans ce cas le marquage secondaire M2 se retrouvera à droite du marquage au sol primaire M1. Ainsi, dans un mode de réalisation non limitatif, le dispositif de différentiation 3 peut comporter deux caméras secondaires 32 disposées chacune de chaque côté du véhicule automobile 5 pour acquérir des images secondaires I2 sur chaque côté du véhicule automobile 5. Ainsi, dans un autre mode de réalisation non limitatif, la caméra primaire 31 peut être disposée à un niveau autre que derrière le rétroviseur central. De même, dans un autre mode de réalisation non limitatif, la caméra secondaire 32 peut être disposée à un niveau autre que dans le rétroviseur latéral.

Ainsi, l'invention décrite présente notamment les avantages suivants :

- elle permet de différencier un marquage au sol secondaire M2 d'un marquage au sol primaire M1 grâce notamment à sa couleur et de connaître l'emplacement du marquage au sol secondaire M2 par rapport au marquage au sol primaire M1,
- elle permet de déduire la position Pos du véhicule 5 par rapport au marquage au sol primaire M1 et au marquage au sol secondaire M2 et savoir ainsi quel marquage au sol suivre.

## Revendications

1. Procédé de différentiation (1) d'un marquage au sol secondaire (M2) d'une route (R1) sur laquelle se situe un véhicule (5) d'un marquage au sol primaire (M1) de ladite route (R1), **caractérisé en ce que** ledit procédé de différentiation (1) comprend :

   - l'acquisition (E1) d'images primaires (I1) de l'environnement extérieur dudit véhicule (5) à l'avant ou à l'arrière dudit véhicule (5) par une caméra primaire (31), lesdites images primaires (I1) comprenant des images dudit marquage au sol primaire (M1) et dudit marquage au sol secondaire (M2) situés à l'avant ou à l'arrière dudit véhicule (5),
   - l'acquisition (E2) d'images secondaires (I2) dudit environnement extérieur sur au moins un côté dudit véhicule (5) par au moins une caméra secondaire (32), lesdites images secondaires (I2) comprenant des images dudit marquage au sol primaire (M1) et dudit marquage au sol secondaire (M2) situés sur ledit au moins un côté dudit véhicule (5),
   - à partir desdites images primaires (I1), la détermination (E3) par ladite caméra primaire (31) de la couleur primaire (C1) dudit marquage au sol primaire (M1),
   - à partir desdites images primaires (I1), la détermination (E4) par ladite caméra primaire (31) de la couleur secondaire (C2) dudit marquage au sol secondaire (M2),
   - la transmission (E5) par la caméra primaire (31) à une unité de contrôle électronique (33) d'un vecteur de position primaire (P1) du marquage primaire (M1) avec sa couleur primaire (C1) associée, et d'un vecteur de position secondaire (P2) du marquage secondaire (M2) avec sa couleur secondaire (C2) associée, ledit vecteur de position primaire (P1) et ledit vecteur de position secondaire (P2) étant déduits desdites images primaires (I1),
   - la transmission (E6) par la caméra secondaire (32) à ladite unité de contrôle électronique (33) d'un vecteur de position primaire (P1) du marquage au sol primaire (M1) et d'un vecteur de position secondaire (P2) du marquage au sol secondaire (M2), ledit vecteur de position primaire (P1) et ledit vecteur de position secondaire (P2) étant déduits desdites images secondaires (I2),
   - la détermination (E7) par ladite unité de contrôle électronique (33) d'un vecteur de position relative (P3) dudit marquage au sol secondaire (M2) par rapport au marquage au sol primaire (M1) dans le champ de vision secondaire (FOV2) de la caméra secondaire (32) à partir desdits vecteurs de position primaires (P1) et desdits vecteurs de position secondaires (P2),
- la corrélation (E8) par ladite unité de contrôle électronique (33) entre la couleur secondaire (C2) et ledit vecteur de position relative (P3) dudit marquage au sol secondaire (M2) dans le champ de vision secondaire (FOV2),
**en ce que** ledit vecteur de position relative (P3) est déterminé avec un angle constant (β1) défini entre :

- un axe longitudinal (Ax) dudit véhicule (5), et
- une demi-droite ayant comme origine un point milieu (p0) en bas d'une image primaire (I1) et passant par un point primaire (p1) de ladite image primaire (I1) au niveau dudit marquage au sol primaire (M1) et par un point secondaire (p2) de ladite image primaire (I1) au niveau dudit marquage au sol secondaire (M2),

et **en ce que** ledit vecteur de position relative (P3) est déterminé avec un angle variable (θ) défini par deux valeurs (θ1, θ2) dont :

- l'une valeur (θ1) est définie entre un axe longitudinal (Ax) dudit véhicule (5) et une demi-droite ayant comme origine un point milieu (p0) en bas d'une image primaire (I1) et passant par un point primaire (p1) de ladite image primaire (11) au niveau dudit marquage au sol primaire (M1), et
- l'autre valeur (θ2) est définie entre ledit axe longitudinal (Ax) dudit véhicule (5) et une demi-droite ayant comme origine ledit point milieu (p0) et passant par un point secondaire (p2) de ladite image primaire (I1) au niveau dudit marquage au sol secondaire (M2), ledit point primaire (p1) et ledit point secondaire (p2) étant alignés selon une ligne (L0) perpendiculaire audit axe longitudinal (Ax) dudit véhicule (5).

2. Procédé de différentiation (1) selon la revendication 1, selon lequel ledit procédé de différentiation (1) comprend en outre :

- l'éclairage (E2') dudit marquage au sol primaire (M1) et dudit marquage au sol secondaire (M2) à l'avant ou à l'arrière dudit véhicule (5), et/ou
- l'éclairage (E2") dudit marquage au sol primaire (M1) et dudit marquage au sol secondaire (M2) sur au moins un côté dudit véhicule (5).

3. Procédé de différentiation (1) selon l'une quelconque des revendications précédentes, selon lequel ladite unité de contrôle électronique (33) fait partie de la caméra primaire (31) ou est déportée par rapport à ladite caméra primaire (31).

4. Procédé de positionnement (2) d'un véhicule (5) par rapport à un marquage secondaire (M2) d'une route (R1), **caractérisé en ce que** le procédé de positionnement (2) est le procédé de différentiation (1) selon la revendication 1, et comprend en outre : le calcul (E9) de la position (Pos) dudit véhicule (5) par rapport audit marquage au sol secondaire (M2) en fonction du vecteur de position relative (P3).

5. Dispositif de différentiation (3) d'un marquage au sol secondaire (M2) d'une route (R1) sur laquelle se situe un véhicule (5) d'un marquage au sol primaire (M1) de ladite route (R1), **caractérisé en ce que** ledit dispositif de différentiation (3) comprend :

- une caméra primaire (31) configurée pour acquérir des images primaires (I1) de l'environnement extérieur dudit véhicule (5) à l'avant ou à l'arrière dudit véhicule (5), lesdites images primaires (I1) comprenant des images dudit marquage au sol primaire (M1) et dudit marquage au sol secondaire (M2) situés à l'avant ou à l'arrière dudit véhicule (5),
- au moins une caméra secondaire (32) configurée pour acquérir des images secondaires (I2) dudit environnement extérieur sur au moins un côté dudit véhicule (5), lesdites images secondaires (I2) comprenant des images dudit marquage au sol primaire (M1) et dudit marquage au sol secondaire (M2) situés sur ledit au moins un côté dudit véhicule (5),
- ladite caméra primaire (31) étant en outre configurée pour déterminer à partir desdites images primaires (I1) la couleur primaire (C1) dudit marquage au sol primaire (M1) et la couleur secondaire (C2) dudit marquage au sol secondaire (M2), et pour transmettre à une unité de contrôle électronique (33) un vecteur de position primaire (P1) du marquage primaire (M1) avec sa couleur primaire (C1) associée, et un vecteur de position secondaire (P2) du marquage secondaire (M2) avec sa couleur secondaire (C2) associée, ledit vecteur de position primaire (P1) et ledit vecteur de position secondaire (P2) étant déduits desdites images primaires (I1),
- ladite caméra secondaire (32) étant en outre configurée pour transmettre à ladite unité de contrôle électronique (33) un vecteur de position primaire (P1) du marquage au sol primaire (M1) et un vecteur de position secondaire (P2) du marquage au sol secondaire (M2), ledit vecteur de position primaire (P1) et ledit vecteur de position secondaire (P2) étant déduits desdites images secondaires (I2),

et **caractérisé en ce que** ledit dispositif de différentiation (3) comprend en outre :

- ladite unité de contrôle électronique (33) configurée pour déterminer un vecteur de position relative (P3) dudit marquage au sol secondaire (M2) par rapport au marquage au sol primaire (M1) dans le champ de vision secondaire (FOV2) de la caméra secondaire (32) à partir desdits vecteurs de position primaires (P1) et desdits vecteurs de position secondaires (P2), et pour réaliser une corrélation entre la couleur secondaire (C2) et ledit vecteur de position relative (P3) dudit marquage au sol secondaire (M2) dans le champ de vision secondaire (FOV2),

**en ce que** ledit vecteur de position relative (P3) est déterminé avec un angle constant (β1) défini entre :

- un axe longitudinal (Ax) dudit véhicule (5), et
- une demi-droite ayant comme origine un point milieu (p0) en bas d'une image primaire (I1) et passant par un point primaire (p1) de ladite image primaire (I1) au niveau dudit marquage au sol primaire (M1) et par un point secondaire (p2) de ladite image primaire (I1) au niveau dudit marquage au sol secondaire (M2),

et **en ce que** ledit vecteur de position relative (P3) est déterminé avec un angle variable (θ) défini par deux valeurs (θ1, θ2) dont :

- l'une valeur (θ1) est définie entre un axe longitudinal (Ax) dudit véhicule (5) et une demi-droite ayant comme origine un point milieu (p0) en bas d'une image primaire (I1) et passant par un point primaire (p1) de ladite image primaire (I1) au niveau dudit marquage au sol primaire (M1), et
- l'autre valeur (θ2) est définie entre ledit axe longitudinal (Ax) dudit véhicule (5) et une demi-droite ayant comme origine ledit point milieu (p0) et passant par un point secondaire (p2) de ladite image primaire (I1) au niveau dudit marquage au sol secondaire (M2), ledit point primaire (p1) et ledit point secondaire (p2) étant alignés selon une ligne (L0) perpendiculaire audit axe longitudinal (Ax) dudit véhicule (5).

**Patentansprüche**

1. Verfahren zur Unterscheidung (1) einer sekundären Bodenmarkierung (M2) einer Straße (R1), auf der sich ein Fahrzeug (5) befindet, von einer primären Bodenmarkierung (M1) der genannten Straße (R1), **dadurch gekennzeichnet, dass** das genannte Unterscheidungsverfahren (1) umfasst:

- die Erfassung (E1) von primären Bildern (11) der äußeren Umgebung des genannten Fahrzeugs (5) vor oder hinter dem genannten Fahrzeug (5) durch eine primäre Kamera (31), wobei die genannten primären Bilder (11) Bilder der genannten primären Bodenmarkierung (M1) und der genannten sekundären Bodenmarkierung (M2) umfassen, die sich vor oder hinter dem genannten Fahrzeug (5) befinden,
- die Erfassung (E2) von sekundären Bildern (12) der genannten äußeren Umgebung auf mindestens einer Seite des genannten Fahrzeugs (5) durch mindestens eine sekundäre Kamera (32), wobei die genannten sekundären Bilder (12) Bilder der genannten primären Bodenmarkierung (M1) und der genannten sekundären Bodenmarkierung (M2) umfassen, die sich auf der genannten mindestens einen Seite des genannten Fahrzeugs (5) befinden,
- aus den genannten primären Bildern (I1) die Bestimmung (E3) durch die genannte primäre Kamera (31) der primären Farbe (C1) der genannten primären Bodenmarkierung (M1),
- aus den genannten primären Bildern (I1) die Bestimmung (E4) durch die genannte primäre Kamera (31) der sekundären Farbe (C2) der genannten sekundären Bodenmarkierung (M2),
- die Übertragung (E5) durch die primäre Kamera (31) an eine elektronische Steuereinheit (33) eines primären Positionsvektors (P1) der primären Markierung (M1) mit ihrer zugehörigen primären Farbe (C1) und eines sekundären Positionsvektors (P2) der sekundären Markierung (M2) mit ihrer zugehörigen sekundären Farbe (C2), wobei der genannte primäre Positionsvektor (P1) und der genannte sekundäre Positionsvektor (P2) aus den genannten primären Bildern (11) abgeleitet werden,
- die Übertragung (E6) durch die sekundäre Kamera (32) an die genannte elektronische Steuereinheit (33) eines primären Positionsvektors (P1) der primären Bodenmarkierung (M1) und eines sekundären Positionsvektors (P2) der sekundären Bodenmarkierung (M2), wobei der genannte primäre Positionsvektor (P1) und der genannte sekundäre Positionsvektor (P2) aus den genannten sekundären Bildern (I2) abgeleitet werden,
- die Bestimmung (E7) durch die genannte elektronische Steuereinheit (33) eines relativen Positionsvektors (P3) der genannten sekundären Bodenmarkierung (M2) in Bezug auf die primäre Bodenmarkierung (M1) im sekundären Sichtfeld (FOV2) der sekundären Kamera (32) aus den genannten primären Positionsvektoren (P1) und den genannten sekundären Positionsvektoren (P2),

- die Korrelation (E8) durch die genannte elektronische Steuereinheit (33) zwischen der sekundären Farbe (C2) und dem genannten relativen Positionsvektor (P3) der genannten sekundären Bodenmarkierung (M2) im sekundären Sichtfeld (FOV2),

dadurch, dass der genannte relative Positionsvektor (P3) mit einem konstanten Winkel (β1) bestimmt wird, der definiert ist zwischen: - einer Längsachse (Ax) des genannten Fahrzeugs (5), und

- einem Halbstrahl, der als Ursprung einen Mittelpunkt (p0) am unteren Rand eines primären Bildes (11) hat und durch einen primären Punkt (p1) des genannten primären Bildes (11) auf der Höhe der genannten primären Bodenmarkierung (M1) und durch einen sekundären Punkt (p2) des genannten primären Bildes (11) auf der Höhe der genannten sekundären Bodenmarkierung (M2) verläuft,

und dadurch, dass der genannte relative Positionsvektor (P3) mit einem variablen Winkel (0) bestimmt wird, der durch zwei Werte (01, 02) definiert ist, wobei:

- ein Wert (01) zwischen einer Längsachse (Ax) des genannten Fahrzeugs (5) und einem Halbstrahl definiert ist, der als Ursprung einen Mittelpunkt (p0) am unteren Rand eines primären Bildes (11) hat und durch einen primären Punkt (p1) des genannten primären Bildes (11) auf der Höhe der genannten primären Bodenmarkierung (M1) verläuft, und
- der andere Wert (02) zwischen der genannten Längsachse (Ax) des genannten Fahrzeugs (5) und einem Halbstrahl definiert ist, der als Ursprung den genannten Mittelpunkt (p0) hat und durch einen sekundären Punkt (p2) des genannten primären Bildes (11) auf der Höhe der genannten sekundären Bodenmarkierung (M2) verläuft, wobei der genannte primäre Punkt (p1) und der genannte sekundäre Punkt (p2) entlang einer Linie (L0) ausgerichtet sind, die senkrecht zur genannten Längsachse (Ax) des genannten Fahrzeugs (5) verläuft.

2. Unterscheidungsverfahren (1) nach Anspruch 1, wobei das genannte Unterscheidungsverfahren (1) ferner umfasst:

- die Beleuchtung (E2') der genannten primären Bodenmarkierung (M1) und der genannten sekundären Bodenmarkierung (M2) vor oder hinter dem genannten Fahrzeug (5), und/oder
- -1 die Beleuchtung (E2") der genannten primären Bodenmarkierung (M1) und der genannten sekundären Bodenmarkierung (M2) auf mindestens einer Seite des genannten Fahrzeugs (5).

3. Unterscheidungsverfahren (1) nach einem der vorhergehenden Ansprüche, wobei die genannte elektronische Steuereinheit (33) Teil der primären Kamera (31) ist oder von der genannten primären Kamera (31) entfernt angeordnet ist.

4. Positionierungsverfahren (2) eines Fahrzeugs (5) in Bezug auf eine sekundäre Markierung (M2) einer Straße (R1), **dadurch gekennzeichnet, dass** das Positionierungsverfahren (2) das Unterscheidungsverfahren (1) nach Anspruch 1 ist und ferner umfasst: die Berechnung (E9) der Position (Pos) des genannten Fahrzeugs (5) in Bezug auf die genannte sekundäre Bodenmarkierung (M2) in Abhängigkeit vom relativen Positionsvektor (P3).

5. Unterscheidungsvorrichtung (3) einer sekundären Bodenmarkierung (M2) einer Straße (R1), auf der sich ein Fahrzeug (5) befindet, von einer primären Bodenmarkierung (M1) der genannten Straße (R1), **dadurch gekennzeichnet, dass** die genannte Unterscheidungsvorrichtung (3) umfasst:

- eine primäre Kamera (31), die konfiguriert ist, um primäre Bilder (11) der äußeren Umgebung des genannten Fahrzeugs (5) vor oder hinter dem genannten Fahrzeug (5) zu erfassen, wobei die genannten primären Bilder (11) Bilder der genannten primären Bodenmarkierung (M1) und der genannten sekundären Bodenmarkierung (M2) umfassen, die sich vor oder hinter dem genannten Fahrzeug (5) befinden, mindestens eine sekundäre Kamera (32), die konfiguriert ist, um sekundäre Bilder (12) der genannten äußeren Umgebung auf mindestens einer Seite des genannten Fahrzeugs (5) zu erfassen, wobei die genannten sekundären Bilder (12) Bilder der genannten primären Bodenmarkierung (M1) und der genannten sekundären Bodenmarkierung (M2) umfassen, die sich auf der genannten mindestens einen Seite des genannten Fahrzeugs (5) befinden,

- wobei die genannte primäre Kamera (31) ferner konfiguriert ist, um aus den genannten primären Bildern (11) die primäre Farbe (C1) der genannten primären Bodenmarkierung (M1) und die sekundäre Farbe (C2) der genannten sekundären Bodenmarkierung (M2) zu bestimmen und an eine elektronische Steuereinheit (33) einen primären Positionsvektor (P1) der primären Markierung (M1) mit ihrer zugehörigen primären Farbe (C1) und einen sekundären Positionsvektor (P2) der sekundären Markierung (M2) mit ihrer zugehörigen sekundären Farbe (C2) zu übertragen, wobei der genannte primäre Positionsvektor (P1) und der genannte sekundäre Positionsvektor (P2) aus den genannten primären Bildern (11) abgeleitet werden,

- wobei die genannte sekundäre Kamera (32) ferner konfiguriert ist, um an die genannte elektronische Steuereinheit (33) einen primären Positionsvektor (P1) der primären Bodenmarkierung (M1) und einen sekundären Positionsvektor (P2) der sekundären Bodenmarkierung (M2) zu übertragen, wobei der genannte primäre Positionsvektor (P1) und der genannte sekundäre Positionsvektor (P2) aus den genannten sekundären Bildern (12) abgeleitet werden,

und **dadurch gekennzeichnet, dass** die genannte Unterscheidungsvorrichtung (3) ferner umfasst:

- die genannte elektronische Steuereinheit (33), die konfiguriert ist, um einen relativen Positionsvektor (P3) der genannten sekundären Bodenmarkierung (M2) in Bezug auf die primäre Bodenmarkierung (M1) im sekundären Sichtfeld (FOV2) der sekundären Kamera (32) aus den genannten primären Positionsvektoren (P1) und den genannten sekundären Positionsvektoren (P2) zu bestimmen und eine Korrelation zwischen der sekundären Farbe (C2) und dem genannten relativen Positionsvektor (P3) der genannten sekundären Bodenmarkierung (M2) im sekundären Sichtfeld (FOV2) herzustellen,

dadurch, dass der genannte relative Positionsvektor (P3) mit einem konstanten Winkel (β1) bestimmt wird, der definiert ist zwischen:

- einer Längsachse (Ax) des genannten Fahrzeugs (5), und
- einem Halbstrahl, der als Ursprung einen Mittelpunkt (p0) am unteren Rand eines primären Bildes (11) hat und durch einen primären Punkt (p1) des genannten primären Bildes (11) auf der Höhe der genannten primären Bodenmarkierung (M1) und durch einen sekundären Punkt (p2) des genannten primären Bildes (11) auf der Höhe der genannten sekundären Bodenmarkierung (M2) verläuft,

und dadurch, dass der genannte relative Positionsvektor (P3) mit einem variablen Winkel (0) bestimmt wird, der durch zwei Werte (01, 02) definiert ist, wobei:

- ein Wert (01) zwischen einer Längsachse (Ax) des genannten Fahrzeugs (5) und einem Halbstrahl definiert ist, der als Ursprung einen Mittelpunkt (p0) am unteren Rand eines primären Bildes (11) hat und durch einen primären Punkt (p1) des genannten primären Bildes (11) auf der Höhe der genannten primären Bodenmarkierung (M1) verläuft, und
- der andere Wert (02) zwischen der genannten Längsachse (Ax) des genannten Fahrzeugs (5) und einem Halbstrahl definiert ist, der als Ursprung den genannten Mittelpunkt (p0) hat und durch einen sekundären Punkt (p2) des genannten primären Bildes (11) auf der Höhe der genannten sekundären Bodenmarkierung (M2) verläuft, wobei der genannte primäre Punkt (p1) und der genannte sekundäre Punkt (p2) entlang einer Linie (L0) ausgerichtet sind, die senkrecht zur genannten Längsachse (Ax) des genannten Fahrzeugs (5) verläuft.

## Claims

1. Method of differentiation (1) of a secondary ground marking (M2) of a road (R1) on which a vehicle (5) is located from a primary ground marking (M1) of said road (R1), **characterized in that** said differentiation method (1) comprises:

- acquiring (E1) primary images (11) of the external environment of said vehicle (5) at the front or rear of said vehicle (5) by a primary camera (31), said primary images (11) comprising images of said primary ground marking (M1) and said secondary ground marking (M2) located at the front or rear of said vehicle (5),
- acquiring (E2) secondary images (12) of said external environment on at least one side of said vehicle (5) by at least one secondary camera (32), said secondary images (12) comprising images of said primary ground marking (M1) and said secondary ground marking (M2) located on said at least one side of said vehicle (5),
- from said primary images (11), determining (E3) by said primary camera (31) the primary color (C1) of said primary ground marking (M1),
- from said primary images (11), determining (E4) by said primary camera (31) the secondary color (C2) of said secondary ground marking (M2),
- transmitting (E5) by the primary camera (31) to an electronic control unit (33) a primary position vector (P1) of the primary marking (M1) with its associated primary color (C1), and a secondary position vector (P2) of the secondary marking (M2) with its associated secondary color (C2), said primary position vector (P1) and said secondary position vector (P2) being derived from said primary images (11),
- transmitting (E6) by the secondary camera (32) to said electronic control unit (33) a primary position vector (P1) of the primary ground marking (M1) and a secondary position vector (P2) of the secondary ground marking (M2), said primary position vector (P1) and said secondary position vector (P2) being derived from said secondary images (12),
- determining (E7) by said electronic control unit (33) a relative position vector (P3) of said secondary ground marking (M2) with respect to the primary ground marking (M1) in the secondary field of vision (FOV2) of the secondary camera (32) from said primary position vectors (P1) and said secondary position vectors (P2),
- correlating (E8) by said electronic control unit (33) between the secondary color (C2) and said relative position vector (P3) of said secondary ground marking (M2) in the secondary field of vision (FOV2),
wherein said relative position vector (P3) is determined with a constant angle (β1) defined between: - a longitudinal axis (Ax) of said vehicle (5), and

- a half-line having as origin a midpoint (p0) at the bottom of a primary image (11) and passing through a primary point (p1) of said primary image (11) at the level of said primary ground marking (M1) and through a secondary point (p2) of said primary image (11) at the level of said secondary ground marking (M2),

and wherein said relative position vector (P3) is determined with a variable angle (0) defined by two values (01, 02) of which:

- one value (01) is defined between a longitudinal axis (Ax) of said vehicle (5) and a half-line having as origin a midpoint (p0) at the bottom of a primary image (11) and passing through a primary point (p1) of said primary image (11) at the level of said primary ground marking (M1), and
- the other value (02) is defined between said longitudinal axis (Ax) of said vehicle (5) and a half-line having as origin said midpoint (p0) and passing through a secondary point (p2) of said primary image (11) at the level of said secondary ground marking (M2), said primary point (p1) and said secondary point (p2) being aligned along a line (L0) perpendicular to said longitudinal axis (Ax) of said vehicle (5).

2. Differentiation method (1) according to claim 1, wherein said differentiation method (1) further comprises:

   - illuminating (E2') said primary ground marking (M1) and said secondary ground marking (M2) at the front or rear of said vehicle (5), and/or
   - -1 illuminating (E2") said primary ground marking (M1) and said secondary ground marking (M2) on at least one side of said vehicle (5).

3. Differentiation method (1) according to any one of the preceding claims, wherein said electronic control unit (33) is part of the primary camera (31) or is separate from said primary camera (31).

4. Method of positioning (2) a vehicle (5) with respect to a secondary marking (M2) of a road (R1), **characterized in that** the positioning method (2) is the differentiation method (1) according to claim 1, and further comprises: calculating (E9) the position (Pos) of said vehicle (5) with respect to said secondary ground marking (M2) based on the relative position vector (P3).

5. Differentiation device (3) of a secondary ground marking (M2) of a road (R1) on which a vehicle (5) is located from a primary ground marking (M1) of said road (R1), **characterized in that** said differentiation device (3) comprises:

   - a primary camera (31) configured to acquire primary images (11) of the external environment of said vehicle (5) at the front or rear of said vehicle (5), said primary images (11) comprising images of said primary ground marking (M1) and said secondary ground marking (M2) located at the front or rear of said vehicle (5),
   at least one secondary camera (32) configured to acquire secondary images (12) of said external environment on at least one side of said vehicle (5), said secondary images (12) comprising images of said primary ground marking (M1) and said secondary ground marking (M2) located on said at least one side of said vehicle (5),

- said primary camera (31) being further configured to determine from said primary images (11) the primary color (C1) of said primary ground marking (M1) and the secondary color (C2) of said secondary ground marking (M2), and to transmit to an electronic control unit (33) a primary position vector (P1) of the primary marking (M1) with its associated primary color (C1), and a secondary position vector (P2) of the secondary marking (M2) with its associated secondary color (C2), said primary position vector (P1) and said secondary position vector (P2) being derived from said primary images (11),
- said secondary camera (32) being further configured to transmit to said electronic control unit (33) a primary position vector (P1) of the primary ground marking (M1) and a secondary position vector (P2) of the secondary ground marking (M2), said primary position vector (P1) and said secondary position vector (P2) being derived from said secondary images (12),

and **characterized in that** said differentiation device (3) further comprises:

- said electronic control unit (33) configured to determine a relative position vector (P3) of said secondary ground marking (M2) with respect to the primary ground marking (M1) in the secondary field of vision (FOV2) of the secondary camera (32) from said primary position vectors (P1) and said secondary position vectors (P2), and to perform a correlation between the secondary color (C2) and said relative position vector (P3) of said secondary ground marking (M2) in the secondary field of vision (FOV2),

wherein said relative position vector (P3) is determined with a constant angle (f31) defined between:

- a longitudinal axis (Ax) of said vehicle (5), and
- a half-line having as origin a midpoint (p0) at the bottom of a primary image (11) and passing through a primary point (p1) of said primary image (11) at the level of said primary ground marking (M1) and through a secondary point (p2) of said primary image (11) at the level of said secondary ground marking (M2),

and wherein said relative position vector (P3) is determined with a variable angle (0) defined by two values (01, 02) of which:

- one value (01) is defined between a longitudinal axis (Ax) of said vehicle (5) and a half-line having as origin a midpoint (p0) at the bottom of a primary image (11) and passing through a primary point (p1) of said primary image (11) at the level of said primary ground marking (M1), and
- the other value (02) is defined between said longitudinal axis (Ax) of said vehicle (5) and a half-line having as origin said midpoint (p0) and passing through a secondary point (p2) of said primary image (11) at the level of said secondary ground marking (M2), said primary point (p1) and said secondary point (p2) being aligned along a line (L0) perpendicular to said longitudinal axis (Ax) of said vehicle (5).

1

F1(31, I1) — E1

F2(32, I2) — E2

F3(31, I1, C1(M1)) — E3

F4(31, I1, C2(M2)) — E4

F5(31, 33, M1(P1, C1), M2(P2, C2)) — E5

F6(32, 33, M1(P1), M2(P2)) — E6

F7(33, P3, M1, M2) — E7

F8(33, P3, C2) — E8

## Fig. 1a

Fig. 1b

Fig. 3

<u>Fig. 4a</u>

Fig. 4b

Fig. 5b

Fig. 5a

2

F1(31, I1)  E1

F2(32, I2)  E2

F3(31, I1, C1(M1))  E3

F4(31, I1, C2(M2))  E4

F5(31, 33, M1(P1, C1), M2(P2, C2))  E5

F6(32, 33, M1(P1), M2(P2))  E6

F7(33, P3, M1, M2)  E7

F8(33, P3, C2)  E8

F9(33, Pos(P3), 5)  E9

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2012037312 A